**Europäisches Patentamt**

**European Patent Office**

**Office européen des brevets**

(19)

(11) Veröffentlichungsnummer : **0 090 133**
**B1**

(12)                **EUROPÄISCHE PATENTSCHRIFT**

(45) Veröffentlichungstag der Patentschrift :
07.05.86

(21) Anmeldenummer : 83100474.2

(22) Anmeldetag : 20.01.83

(51) Int. Cl.⁴ : **F 16 J   1/16**

(54) **Tauchkolben für Verbrennungsmotoren mit Mitteln zur seitlichen Führung des Pleuels im Kolben.**

(30) Priorität : 29.03.82 DE 3211472

(43) Veröffentlichungstag der Anmeldung :
05.10.83 Patentblatt 83/40

(45) Bekanntmachung des Hinweises auf die Patenterteilung : 07.05.86 Patentblatt 86/19

(84) Benannte Vertragsstaaten :
FR GB IT

(56) Entgegenhaltungen :
GB-A-   851 322
US-A- 1 524 702
US-A- 2 120 033
US-A- 3 402 643

(73) Patentinhaber : **MAHLE GMBH**
**Patentabteilung Pragstrasse 26-46**
**D-7000 Stuttgart 50 (DE)**

(72) Erfinder : **Ripberger, Emil**
**Brunnenstrasse 6**
**D-7148 Remseck 3 (DE)**
Erfinder : **Stuska, Gotthard, Ing. (grad.)**
**Lange Furche 22**
**D-7012 Fellbach (DE)**

(74) Vertreter : **Pfusch, Volker, Dipl.-Ing.**
**MAHLE GMBH, Patentabteilung Pragstrasse 26-46**
**D-7000 Stuttgart 50 (DE)**

## Beschreibung

Die Erfindung betrifft einen Tauchkolben nach dem Oberbegriff des Anspruchs 1.

Derartige Kolben sind bekannt aus GB-A-851 322 und US-A-3 402 643. Das Pleuel ist dort an der Innenseite der Bolzennaben nur in dem oberen Bereich der Naben geführt. Eine Führung des Pleuels nur in einem Teilbereich der angrenzenden Innenfläche der Bolzennaben hat den Vorteil, daß sich Ungenauigkeiten bei der Parallelität der Nabeninnenflächen bei der Führung des Pleuels weniger stark bemerkbar machen als dies der Fall bei über die gesamte Umfangsfläche der Bolzennaben anliegendem Pleuel der Fall wäre. Die Führung des Pleuels allein im Zenitbereich der Innenflächen der Bolzennaben wird jedoch noch relativ stark von mechanisch und thermisch bedingten Verformungen des Kolbens beeinflußt.

Hiervon ausgehend liegt der Erfindung die Aufgabe zugrunde, die Pleuelführung von derartigen Verformungen des Kolbens noch weiter unabhängig zu machen.

Gelöst wird diese Aufgabe bei einer Alternative des erfindungsgemäßen Lösungsprinzips durch eine Ausgestaltung der innenliegenden Bolzennabenflächen nach den kennzeichnenden Merkmalen des Anspruchs 1. Vorteilhafte Ausgestaltungen lassen sich dabei durch die Lehren nach den Unteransprüchen 2-4 erreichen.

Die zweite Alternative des Lösungsprinzips entspricht der Ausführung nach dem kennzeichnenden Teil des Anspruchs 5.

Die Ausführung nach Anspruch 5 entspricht im Prinzip derjenigen nach Anspruch 1, lediglich mit dem Unterschied, daß die reduzierte Gleitfläche nicht an der Innenfläche der Naben, sondern an dem Pleuel angebracht ist. Wirkungsmäßig sind beide Lösungen jedoch zumindest im Prinzip gleichartig.

Ein Beispiel für jede Lösungsalternative ist in der Zeichnung dargestellt. Es zeigen

Figur 1   einen Schnitt durch einen Kolben mit Draufsicht auf die Bolzennabe,

Figur 2   die Draufsicht auf das kolbenseitige Ende eines Pleuels.

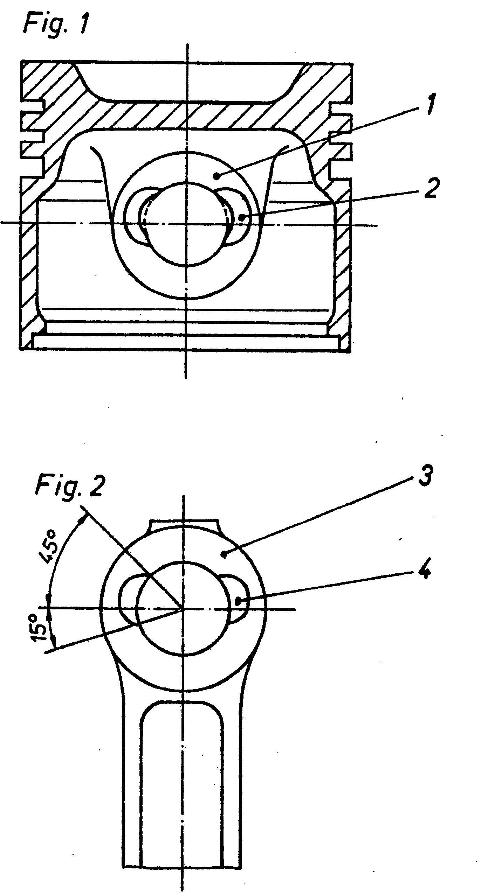

Bei der Ausführung nach der Fig. 1 läuft das nicht dargestellte Pleuel an den an die Bolzennabe 1 angeformten Flächen 2. Die Flächen erstrecken sich jeweils von der Bolzenachse aus gesehen um 45° in Richtung des Kolbenbodens und um 15° in Richtung zum Kolbenschaftende.

Bei der Ausführung nach Figur 2 sind die Teil-Gleitflächen als Bereiche 4 an die Scheibenfläche des Pleuelkopfes 3 angeformt.

Durch die Führung des Pleuels in dem erfindungsgemäß unterhalb des Nabenzenites liegenden Bereich sind die Temperaturen niedriger und relativ gleichmäßig, wodurch auch die Schmierverhältnisse verbessert werden.

## Patentansprüche

1. Tauchkolben für Verbrennungsmotoren, bei dem das über einem Kolbenbolzen angelenkte Pleuel von den Bolzennaben (1) seitlich geführt ist, wobei das Pleuel auf jeder Seite seines kleinen Pleuelauges (3) nur in einem Teilbereich der an das Pleuel angrenzenden Fläche der Bolzennaben (1) anliegt und bei dem das kleine Pleuelauge (3) zu den Bolzennaben (1) hin jeweils eine ebene Gleitfläche aufweist, wobei der Teilbereich an den Bolzennaben (1) angeformt ist, dadurch gekennzeichnet, daß der Teilbereich aus auf beiden Seiten einer ersten durch die Bolzen- und Kolbenlängsachse verlaufenden Ebene angeordneten Flächen (2) besteht, die sich jeweils maximal über ein Bogenmaß von 90° erstrecken, wobei sie auf keiner der beiden Seiten einer senkrecht zur Kolbenlängsachse in der Bolzenachse aufgespannten zweiten Ebene sich über ein Bogenmaß von mehr als 60° erstrecken.

2. Tauchkolben nach Anspruch 1, dadurch gekennzeichnet, daß die Flächen (2) auf keiner der beiden Seiten der zweiten Ebene sich weniger als über ein Bogenmaß von 10° erstrecken.

3. Tauchkolben nach Anspruch 2, dadurch gekennzeichnet, daß die Flächen (2) auf keiner der beiden Seiten der zweiten Ebene sich weniger als 10° auf der einen und mehr als 45° auf der anderen Seite erstrecken.

4. Tauchkolben nach Anspruch 1 oder 2, dadurch gekennzeichnet, daß die Flächen (2) auf beiden Seiten der zweiten Ebene das gleiche Bogenmaß aufweisen.

5. Tauchkolben für Verbrennungsmotoren, bei dem das über einen Kolbenbolzen angelenkte Pleuel von den Bolzennaben (1) seitlich geführt ist, wobei das Pleuel auf jeder Seite seines kleinen Pleuelauges (3) nur in einem Teilbereich der an das Pleuel angrenzenden Fläche der Bolzennaben (1) anliegt, dadurch gekennzeichnet, daß die Bolzennaben (1) zum Pleuelauge (3) hin jeweils eine ebene flächenschlüssige Gleitfläche aufweisen und der Teilbereich jeweils an den Seitenflächen des Pleuelauges (3) aus auf beiden Seiten einer ersten durch die Bolzen und Kolbenlängsachse verlaufenden Ebene angeordneten Bereichen (4) besteht, die angeformt sind, wobei Größe und Lage der Bereiche (4) den kennzeichnenden Merkmalen in den Ansprüchen 1 bis 4 bei einer der Totpunktlagen des Pleuels entsprechen.

## Claims

1. Plunger piston for internal combustion engines, in which the connecting rod, articulated through a piston bolt, is guided laterally by the bolt hubs (1), while the connecting rod abuts on each side of its small connecting rod eye (3) only in a part zone of the face of the bolt hubs (1) which adjoins the connecting rod and in which the small connecting rod eye (3) has towards each of the bolt hubs (1) a plane sliding face, the part zone being formed on the bolt hubs (1), characterised in that the part zone consists of faces (2) arranged on both sides of a first plane extending through the longitudinal axis of bolt and piston, which faces extend each at maximum over an arc measure of 90°, while on neither of the two sides of a second plane laid in the bolt axis perpendicularly of the piston longitudinal axis do they extend over an arc measure of more than 60°.

2. Plunger piston according to Claim 1, characterised in that the faces (2) extend less than over an arc measure of 10° on neither of the two sides of the second plane.

3. Plunger piston according to Claim 2, characterised in that the faces (2) extend over less than 10° on the one side and more than 45° on the other side, on neither of the two sides of the second plane.

4. Plunger piston according to Claim 1 or 2, characterised in that the faces (2) possess the same arc measure on both sides of the second plane.

5. Plunger piston for internal combustion engines, in which the connecting rod, articulated through a piston bolt, is guided laterally by the bolt hubs (1), while the connecting rod abuts on each side of its small connecting rod eye (3) only in a part zone of the face of the bolt hubs (1) which adjoins the connecting rod, characterised in that the bolt hubs (1) each comprise towards the connecting rod eye (3) a plane face-locking sliding face and the part zone in each case on the side faces of the connecting rod eye (3) consists of zones (4) arranged on both sides of a first plane passing through the bolt and piston longitudinal axis, which zones are formed on, the size and position of the zones (4) conforming with the characteristic features in Claims 1 to 4 in one of the dead centre positions of the connecting rod.

**Revendications**

1. Piston plongeur pour un moteur à combustion interne, comportant, pour la bielle associée au piston par un axe d'articulation, un guidage latéral, assuré par le bossage d'articulation (1) du piston ; la tête (3) de la bielle ne se trouvant ainsi en appui de chaque côté que sur une zone partielle de la surface adjacente du bossage d'articulation (1), et la tête (3) de la bielle comportant à cet effet une face de glissement plane, disposée de chaque côté en regard d'une face d'appui correspondante réalisée sur une zone partielle de la surface du bossage d'articulation (1) ; le piston étant caractérisé en ce que la zone partielle comporte deux faces (2) disposées de part et d'autre d'un premier plan, qui contient l'axe longitudinal du piston et de son articulation, ces deux faces s'étendant chacune au maximum sur une ouverture angulaire de 90° sans déborder de plus de 60° de part et d'autre d'un deuxième plan, perpendiculaire à l'axe longitudinal du piston et contenant son axe d'articulation.

2. Piston plongeur selon la revendication 1, caractérisé en ce que sur aucun des côtés du deuxième plan, les faces (2) ne s'étendent sur moins d'une ouverture angulaire de 10°.

3. Piston plongeur selon la revendication 2, caractérisé en ce que les faces (2) s'étendant sur une ouverture angulaire d'au moins 10° d'un côté du deuxième plan, et sur une ouverture angulaire de 45° au plus de l'autre côté de ce même plan.

4. Piston plongeur selon l'une des revendications 1 ou 2, caractérisé en ce que les faces (2) s'étendent sur la même ouverture angulaire des deux côtés du deuxième plan.

5. Piston plongeur pour un moteur à combustion interne, comportant, pour la bielle associée au piston par un axe d'articulation, un guidage latéral, assuré par le bossage d'articulation (1) du piston ; la tête (3) de la bielle ne se trouvant ainsi en appui de chaque côté que sur une zone partielle de la surface adjacente du bossage d'articulation (1) ; piston caractérisé en ce que les deux parties du bossage d'articulation (1) du piston, disposées en regard de la tête (3) de la bielle, comportent chacune une surface de glissement plane et continue ; et en ce que la zone partielle consiste chaque fois sur les surfaces latérales de la tête de bielle (3), en des plages (4) disposées, de part et d'autre d'un premier plan qui contient l'axe longitudinal du piston et de son articulation ; les deux plages précitées (4) ayant chacune, en position de point mort de la bielle, une position et une amplitude qui correspondent aux valeurs indiquées dans les revendications 1 à 4.

*Fig. 1*

*Fig. 2*